# EUROPÄISCHE PATENTSCHRIFT

(11) **EP 3 957 052 B1**
(45) Veröffentlichungstag und Bekanntmachung des Hinweises auf die Patenterteilung: **05.04.2023**
(21) Anmeldenummer: 20735062.0
(22) Anmeldetag: 09.06.2020
(51) Int. Cl.: H04L 9/40

(54) **RECHENANLAGE UND VERFAHREN ZUM BETREIBEN EINER RECHENANLAGE**
COMPUTING SYSTEM AND METHOD FOR OPERATING A COMPUTING SYSTEM
CALCULATEUR ET PROCÉDÉ POUR FAIRE FONCTIONNER UN CALCULATEUR

(30) Priorität: 14.06.2019 DE 102019208711
(43) Veröffentlichungstag der Anmeldung: 23.02.2022
(73) Patentinhaber: Siemens Mobility GmbH, 81739 München (DE)
(72) Erfinder: AUST, Frank, 38239 Salzgitter (DE); SEIFERT, Matthias, 21244 Buchholz (DE); WIMMER, Martin, 85579 Neubiberg (DE)
(74) Vertreter: Siemens Patent Attorneys
(86) Internationale Anmeldenummer: PCT/EP2020/065906
(87) Internationale Veröffentlichungsnummer: WO 2020/249536

(56) Entgegenhaltungen:
- EP-A1- 3 483 769
- WO-A2-99/46882
- US-A1- 2014 237 372
- RICARDA WEBER ET AL: "Überwachung sicherheitskritischer Bahnnetzwerke mittels eines Einweg-Gateways - Monitoring safety-critical railway networks using unidirectional gateways", SIGNAL UND DRAHT: SIGNALLING & DATACOMMUNICATION, Bd. 110, Nr. 9, 7. September 2018 (2018-09-07), Seiten 21-28, XP055509675, DE ISSN: 0037-4997

## Beschreibung

Die Erfindung bezieht sich auf Rechenanlagen sowie auf Verfahren zum Betreiben von Rechenanlagen.

Es entsteht zunehmend Bedarf an Fernwartung (fachsprachlich "Remote-Access") für sicherheitskritische Rechenanlagen. Die zu wartenden Anlagenelemente befinden sich jedoch bei bestimmten Anwendungen in einer besonderen Sicherheitszone, auf die kein direkter Fernzugriff möglich ist.

Zudem besteht ein steigender Bedarf an der Vernetzung sicherheitsrelevanter Anlagen mit herkömmlichen IT-Systemen. Bei einer derartigen Vernetzung ist sicherzustellen, dass über die Verbindung dieser Datennetzwerke nur zulässige Informationselemente übertragen werden. Für alle anderen und damit nichtzulässigen Informationen sind die Datennetzwerke voneinander zu trennen.

Die Verbindung der Datennetzwerke kann bekanntermaßen bidirektional z. B. mit Routern oder Gateways erfolgen, die über Firewalls verfügen. Kritische Netzwerke mit sehr hohem Schutzbedarf werden heute jedoch in der Regel vollständig getrennt von anderen Netzen - wie dem Office-Netzwerk oder dem Internet - betrieben.

Um z. B. Diagnosedaten aus einem sicherheitskritischen Netzwerk auszuleiten, um sie an einer entfernten Stelle von einem Experten analysieren zu können, werden heute Datendioden eingesetzt, die den Schutz des kritischen Netzwerkes nicht kompromittieren.

Ein bisher ungelöstes Problem besteht nun darin, wie mit einem ähnlich hohen Sicherheitsanspruch Daten auch in die andere Richtung, also von dem unsicheren Netzwerk (z. B. offenes Netzwerk) in das sicherheitskritische Netzwerk (geschlossenes Netzwerk) transportiert werden können. Diese Daten werden z.

B. dafür benötigt, um bestehende Konfigurationen zu ändern oder Updates in die dort vorhandenen Komponenten einzuspielen. Der relevante Stand der Technik wird durch die Dokumente US 2014/237372 A1 und WO 99/46882 A2 repräsentiert.

Der Erfindung liegt die Aufgabe zugrunde, Rechenanlagen und Verfahren für die Fernüberwachung im Hinblick auf einen sicheren Datenempfang von außen weiterzuentwickeln.

Diese Aufgabe wird erfindungsgemäß durch eine Rechenanlage mit den Merkmalen gemäß Patentanspruch 1 gelöst. Vorteilhafte Ausgestaltungen der erfindungsgemäßen Rechenanlage sind in Unteransprüchen angegeben.

Danach ist erfindungsgemäß vorgesehen, dass die Rechenanlage einen Eingangsdatenpfad, der eine Schnittstelleneinrichtung der Rechenanlage unidirektional mit der Recheneinrichtung verbindet, und eine Ausgangsdatendiode, die die Recheneinrichtung unidirektional mit der Schnittstelleneinrichtung verbindet, aufweist, der Eingangsdatenpfad eine Datenschleuse aufweist, die mit einem ersten Anschluss mit der Schnittstelleneinrichtung und mit einem zweiten Anschluss mit der Recheneinrichtung in Verbindung steht, die Datenschleuse einen Zwischenspeicher zur Zwischenspeicherung von Daten aufweist und derart ausgestaltet ist, dass der Zwischenspeicher wahlweise ausschließlich mit dem ersten oder zweiten Anschluss verbindbar ist, aber nicht gleichzeitig mit beiden Anschlüssen, und die Recheneinrichtung derart ausgestaltet ist, dass sie in der Schnittstelleneinrichtung vorliegende Daten von der Schnittstelleneinrichtung ausschließlich dann akzeptiert, wenn diese innerhalb einer von der Recheneinrichtung selbst unter Einbezug der Ausgangsdatendiode initiiertenÜbertragungssession von der Schnittstelleneinrichtung über den Eingangsdatenpfad zu der Recheneinrichtung übermittelt werden.

Ein wesentlicher Vorteil der erfindungsgemäßen Rechenanlage ist darin zu sehen, dass durch die erfindungsgemäße Kombination von Datenschleuse und Übertragungssessions, die recheneinrichtungsseitig initiiert werden , sowohl durchgängig eine hardwaremäßige Trennung zwischen der Recheneinrichtung und externen Datensendeeinrichtungen gewährleistet wird als auch - durch die Begrenzung auf selbst initiierte Übertragungssessions - stets ein inhaltlicher Einbezug der Schnittstelleneinrichtung und damit eine softwaremäßige Trennung sichergestellt wird, so dass ein direkter bzw. unmittelbarer Datendurchgriff von externen Datensendeeinrichtungen aus auf die Recheneinrichtung hard- und softwaremäßig erschwert oder sogar unmöglich gemacht wird.

Die Übertragungssessions sind vorzugsweise verschlüsselt.

Bei den Übertragungssessions handelt es sich vorzugsweise um Übertragungssessions, die eine Übertragung von Session-Kontextinformationen, wie sie beispielsweise auch auf Layer 5 des OSI Netzwerkmodells und Protokollspezifikationen wie ISO 8327 / X.225 Verwendung finden, einschließen bzw. auf solchen Kontextinformationen beruhen. Die Übertragung der Session-Kontextinformationen basiert hier auf zwei undirektional betriebenen Übertragungszweigen, nämlich einem undirektionalen Pfad in Richtung zu der Recheneinrichtung über den Eingangsdatenpfad und einem anderen unidirektionalen Pfad zu der Schnittstelleneinrichtung über die Ausgangsdatendiode.

Bei einer vorteilhaften Ausführungsvariante ist vorgesehen, dass die Schnittstelleneinrichtung zum Empfang einer externen, von einer externen Datensendeeinrichtung kommenden, Anfragenachricht geeignet ist, die den Wunsch einer externen Datensendeeinrichtung nach einer Datenübertragung zu der Recheneinrichtung anzeigt.

Bei der letztgenannten Ausführungsvariante ist es vorteilhaft, wenn die Schnittstelleneinrichtung derart ausgestaltet ist, dass sie nach Empfang der externen Anfragenachricht einer externen Datensendeeinrichtung eine die Anfrage enthaltende modifizierte Anfragenachricht erstellt und diese an die Datenschleuse weiterleitet, wobei die modifizierte Anfragenachricht Identifikationsdaten der Schnittstelleneinrichtung enthält.

Besonders vorteilhaft ist es, wenn die Schnittstelleneinrichtung derart ausgestaltet ist, dass sie nach Empfang der externen Anfragenachricht eine Prüfung durchführt, ob die Anfragenachricht von einer externen Datensendeeinrichtung stammt, die zum Übertragen von Daten autorisiert ist, und im Falle einer Anfragenachricht von einer autorisierten Datensendeeinrichtung die Anfragenachricht oder die modifizierte Anfragenachricht an die Datenschleuse sendet und dies andernfalls unterlässt.

Alternativ oder zusätzlich kann in vorteilhafter Weise vorgesehen sein, dass die Schnittstelleneinrichtung derart ausgestaltet ist, dass sie nach Empfang der externen Anfragenachricht eine Prüfung durchführt, ob die Anfragenachricht Steuerbefehle oder ausführbare Softwaremodule enthält, und falls dies der Falle ist, die Weiterleitung der Anfragenachricht an die Datenschleuse unterlässt.

Auch ist es vorteilhaft, wenn die Schnittstelleneinrichtung externe Daten, die von einer externen Datensendeeinrichtung auf Aufforderung der Recheneinrichtung oder unaufgefordert übersandt worden sind, zwischenspeichert und die Recheneinrichtung derart ausgestaltet ist, dass sie die in der Schnittstelleneinrichtung zwischengespeicherten Daten, unverarbeitet oder von der Schnittstelleneinrichtung verarbeitet, von der Schnittstelleneinrichtung ausschließlich dann akzeptiert, wenn diese innerhalb einer von der Recheneinrichtung selbst unter Einbezug der Ausgangsdatendiode initiierten, vorzugsweise verschlüsselten Übertragungssession von der Schnittstelleneinrichtung über den Eingangsdatenpfad zu der Recheneinrichtung übermittelt werden.

Der Eingangsdatenpfad weist bevorzugt eine zwischen der Schnittstelleneinrichtung und der Datenschleuse angeordnete Eingangsdatendiode auf, die eine Datenübertragung in Richtung der nachgeordneten Datenschleuse erlaubt und in Gegenrichtung unterbindet.

Die Erfindung bezieht sich darüber hinaus auf eine eisenbahntechnische Anlage, insbesondere ein Stellwerk oder ein Schienenfahrzeug. Erfindungsgemäß weist die eisenbahntechnische Anlage eine Rechenanlage wie oben beschrieben auf.

Die Erfindung bezieht sich darüber hinaus auf ein Verfahren zum Betreiben einer Rechenanlage, insbesondere einer solchen wie oben beschrieben. Erfindungsgemäß ist vorgesehen, dass eine Recheneinrichtung der Rechenanlage über eine Schnittstelleneinrichtung eingehende Daten einer externen Datensendeeinrichtung ausschließlich dann akzeptiert, wenn diese innerhalb einer von ihr selbst unter Einbezug einer Ausgangsdatendiode initiierten, vorzugsweise verschlüsselten Übertragungssession von der Schnittstelleneinrichtung über einen Eingangsdatenpfad, der eine der Schnittstelleneinrichtung nachgeordnete Datenschleuse umfasst, übermittelt werden, wobei die Datenschleuse datenstrommäßig wahlweise ausschließlich mit der Schnittstelleneinrichtung oder der Recheneinrichtung verbunden wird, aber nicht gleichzeitig mit beiden.

Bezüglich der Vorteile des erfindungsgemäßen Verfahrens sowie bezüglich vorteilhafter Ausgestaltungen des erfindungsgemäßen Verfahrens sei auf die obigen Ausführungen im Zusammenhang mit der erfindungsgemäßen Rechenanlage verwiesen.

Vorteilhaft ist es, wenn die Recheneinrichtung nach Empfang der Daten der Datensendeeinrichtung mit den Daten einen Signaturdatensatz erstellt und diesen über die Ausgangdatendiode zur externen Datensendeeinrichtung sendet, und die Recheneinrichtung die empfangenen Daten nur verwertet oder berücksichtigt, wenn die Datensendeeinrichtung nach Empfang des Signaturdatensatzes rückmeldet, dass der Signaturdatensatz einen korrekten Datenempfang bestätigt.

Mit der Schnittstelleneinrichtung wird nach Empfang einer externen Anfragenachricht einer externen Datensendeeinrichtung vorzugsweise eine die Anfrage enthaltende modifizierte Anfragenachricht erstellt und diese an die Datenschleuse weitergeleitet, wobei die modifizierte Anfragenachricht Identifikationsdaten der Schnittstelleneinrichtung enthält.

Alternativ oder zusätzlich ist es vorteilhaft, wenn nach Empfang einer externen Anfragenachricht eine Prüfung durchgeführt wird, ob die Anfragenachricht von einer externen Datensendeeinrichtung stammt, die zum Übertragen von Daten autorisiert ist, im Falle einer Anfragenachricht von einer autorisierten Datensendeeinrichtung die Anfragenachricht oder die modifizierte Anfragenachricht an die Empfangsdatendiode gesendet wird und dies andernfalls unterlassen wird.

Alternativ oder zusätzlich kann in vorteilhafter Weise vorgesehen sein, dass nach Empfang einer externen Anfragenachricht eine Prüfung durchgeführt wird, ob die Anfragenachricht Steuerbefehle oder ausführbare Softwaremodule enthält, und falls dies der Fall ist, die Weiterleitung der Anfragenachricht an die Empfangsdatendiode unterlassen wird.

Alternativ oder zusätzlich ist es vorteilhaft, wenn die Recheneinrichtung nach Empfang von Daten einer externen Datensendeeinrichtung mit diesen einen Signaturdatensatz erstellt und den Signaturdatensatz über die Ausgangsdatendiode zur externen Datensendeeinrichtung sendet.

Alternativ oder zusätzlich kann in vorteilhafter Weise vorgesehen sein, dass in einem Zwischenspeicher in der Eingangsdatendiode oder mit einem Zwischenspeicher zwischen der Eingangsdatendiode und der Datenschleuse die externe oder modifizierte Anfragenachricht und/oder die Daten der externen Datensendeeinrichtung zwischengespeichert werden und erst anschließend aufgeteilt auf Datenpakete - Datenpaket für Datenpaket - über die Datenschleuse zur Recheneinrichtung übertragen werden.

In dem Eingangsdatenpfad wird vorzugsweise zumindest ein Medienwechsel, insbesondere zumindest ein physikalischer Medienwechsel, ein Protokollwechsel und/oder ein Transport-Medienwechsel, durchgeführt.

Zur Fehlererkennung werden bei der Datenübertragung vorzugsweise Sequenzen gezählt und/oder Signaturen übertragen.

Die Recheneinrichtung steuert die Datenschleuse vorzugsweise an oder zumindest mit an, vorzugsweise derart, dass, wenn nur ausgehender Datenverkehr erlaubt ist oder sein soll, die Recheneinrichtung mit der Datenschleuse verbunden ist und die Verbindung zwischen der Datenschleuse und der Datensendeeinrichtung unterbunden ist, und dass, wenn Daten übertragen werden sollen, die Recheneinrichtung ein Umschalten der Datenschleuse auslöst.

Die Erfindung wird nachfolgend anhand von Ausführungsbeispielen näher erläutert; dabei zeigen beispielhaft:
- Figur 1: ein Ausführungsbeispiel für eine Anordnung mit einer erfindungsgemäßen Rechenanlage und einer externen Datensendeeinrichtung und
- Fig. 2-10: weitere Darstellungen der Anordnung gemäß Figur 1 während einer beispielhaften Datenübertragung.

In den Figuren werden der Übersicht halber für identische oder vergleichbare Komponenten stets dieselben Bezugszeichen verwendet.

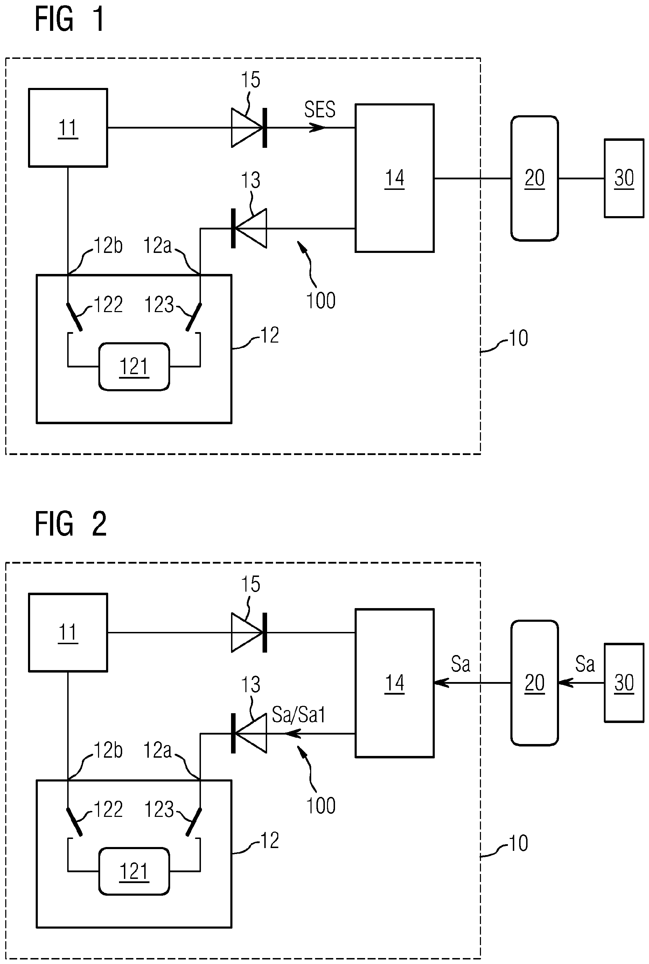

Die Figur 1 zeigt eine Rechenanlage 10, die eine Recheneinrichtung 11 aufweist. Die Recheneinrichtung 11 steht über eine Datenschleuse 12, eine Eingangsdatendiode 13 sowie über eine Schnittstelleneinrichtung 14 mit einem nur angedeuteten Kommunikationsnetz 20 in Verbindung. Über das Kommunikationsnetz 20 kann die Rechenanlage 10 Daten und Anfragenachrichten Sa einer externen Datensendeeinrichtung 30 empfangen. Bei dem Kommunikationsnetz 20 kann es sich beispielsweise um ein Büronetz oder das Internet handeln.

Die Datenschleuse 12 weist einen ersten Anschluss 12a auf, der mit der Eingangsdatendiode 13 in Verbindung steht. Ein zweiter Anschluss 12b der Datenschleuse 12 ist mit der Recheneinrichtung 11 verbunden. Die Datenschleuse 12 umfasst einen Zwischenspeicher 121, der eine Zwischenspeicherung von Daten ermöglicht. Der Zwischenspeicher 121 steht über einen ersten Schalter 122 mit dem zweiten Anschluss 12b und über einen zweiten Schalter 123 mit dem ersten Anschluss 12a in Verbindung. Die beiden Schalter 122 und 123 können gleichzeitig ausgeschaltet sein, werden aber niemals gleichzeitig eingeschaltet. Der Zwischenspeicher 121 kann also entweder isoliert sein oder mit einem einzigen der beiden Anschlüsse 12a bzw. 12b verbunden sein. Die Ansteuerung der Schalter 122 und 123 kann durch eine interne Steuereinheit der Datenschleuse 12 erfolgen oder von außen beispielsweise durch die Recheneinrichtung 11.

Bei dem Ausführungsbeispiel gemäß Figur 1 bilden die Datenschleuse 12, die Eingangsdatendiode 13 und die Schnittstelleneinrichtung 14 einen Eingangsdatenpfad 100 der Rechenanlage 10, der eine intransparente unidirektionale Datenübertragung von der Schnittstelleneinrichtung 14 in Richtung der Recheneinrichtung 11 ermöglicht. Für das Erreichen der Intransparenz ist die Datenschleuse 12 vorgesehen, deren erster Anschluss 12a mit der Eingangsdatendiode 13 verbunden werden kann, um von der Eingangsdatendiode 13 Daten zu empfangen; zu diesem Zeitpunkt ist der zweite Anschluss 12b der Datenschleuse 12 von der Recheneinrichtung 11 getrennt, so dass kein unmittelbarer bzw. direkter Datenfluss von der Eingangsdatendiode 13 in Richtung der Recheneinrichtung 11 möglich ist. Daten, die von der Eingangsdatendiode 13 über den ersten Anschluss 12a in die Datenschleuse 12 eingespeist werden, werden zunächst in dem Zwischenspeicher 121 zwischengespeichert. Nach erfolgter Zwischenspeicherung kann die Datenschleuse 12 umgeschaltet werden, wobei der erste Anschluss 12a von der Eingangsdatendiode 13 getrennt und erst anschließend der zweite Anschluss 12b der Datenschleuse 12 mit der Recheneinrichtung 11 verbunden wird. Die Datenschleuse 12 ist mit anderen Worten derart ausgestaltet, dass ihre beiden Anschlüsse 12a und 12b stets ausschließlich entweder mit der Eingangsdatendiode 13 oder mit der Recheneinrichtung 11 verbunden sind, aber niemals mit beiden Anschlüssen bzw. beiden Einheiten gleichzeitig.

Die Recheneinrichtung 11 ist ausgangsseitig über eine unidirektional arbeitende Ausgangsdatendiode 15 mit dem Kommunikationsnetz 20 und der externen Datensendeeinrichtung 30 verbindbar, sei es unmittelbar oder mittelbar, beispielsweise über die Schnittstelleneinrichtung 14 (wie in den Figuren 1 bis 10 gezeigt) oder eine andere nicht weiter dargestellte Komponente der Rechenanlage 10.

Die Recheneinrichtung 11 ist derart ausgestaltet, dass sie in der Schnittstelleneinrichtung 14 vorliegende Daten von der Schnittstelleneinrichtung 14 ausschließlich dann akzeptiert, wenn diese innerhalb einer von der Recheneinrichtung 11 selbst unter Einbezug der Ausgangsdatendiode 15 initiierten, verschlüsselten Übertragungssession SES von der Schnittstelleneinrichtung 14 über den Eingangsdatenpfad 100 zu der Recheneinrichtung 11 übermittelt werden. Da die Datenschleuse 12 einen Bestandteil des Eingangsdatenpfads 100 bildet, wird die Datenschleuse 12 automatisch in das Session-Handling eingebunden.

Ein typischer Ablauf wäre beispielsweise, dass initial der Schalter 122 geschlossen ist; die Datenschleuse 12 wartet nun beispielsweise auf ein Trigger-/Steuerungssignal seitens der Recheneinrichtung 11. Dies wird von der Recheneinrichtung 11 erzeugt, sobald die Recheneinrichtung 11 einen entsprechenden Session-Kontext an die Schnittstelleneinrichtung 12 übermittelt hat und damit die nächste Übertragungssession SES startet. Bei Vorliegen des Trigger-/Steuerungssignals öffnet eine beispielsweise im Zwischenspeicher 121 integrierte und nicht weiter gezeigte Steuereinheit der Datenschleuse 12 den Schalter 122 und schließt den Schalter 123.

Der Zwischenspeicher 121 wartet nun auf eingehende Daten über den Eingangsdatenpfad 100 mit der entsprechenden Sessioninformation der Übertragungssession SES. Wenn eine entsprechende Nachricht eintrifft, wird der Schalter 123 geöffnet. Der Zwischenspeicher 121 ist nun komplett "offline" und führt eine Validierung unter Berücksichtigung der empfangenen Kontextinformationen der Übertragungssession SES durch. Nach der Validierung wird der Schalter 122 geschlossen und die Datenschleuse 12 gibt der Recheneinrichtung 11 das Ergebnis (z. B. in Form der Daten oder des Validierungsergebnisses) bekannt. Ab dann wartet die Datenschleuse 12 wieder auf eine Ansteuerung durch die Recheneinrichtung 11.

Die Steuerung der Datenschleuse 12 kann - wie beschrieben - beispielsweise durch die Recheneinrichtung 11 erfolgen; alternativ kann die Datenschleuse 12 selbst die Steuerungslogik umsetzen, z. B. über einfache zeitliche Steuerung/Polling o.ä.

Daten können von der externen Datensendeeinrichtung 30 zu der Recheneinrichtung 11 beispielsweise übermittelt werden, nachdem die Recheneinrichtung 11 eine entsprechende Aufforderung an die externe Datensendeeinrichtung 30 übermittelt hat, oder alternativ als Reaktion der Recheneinrichtung 11 auf eine entsprechende Anfrage seitens der externen Datensendeeinrichtung 30. Nachfolgend soll zunächst beispielhaft erläutert werden, wie eine Datenübertragung auf Initiative der externen Datensendeeinrichtung 30 vorteilhaft abgewickelt werden kann:
Sendet die externe Datensendeeinrichtung 30 eine Anfragenachricht Sa an die Schnittstelleneinrichtung 14, mit der die externe Datensendeeinrichtung 30 den Wunsch nach einer Datenübertragung von Daten in Richtung der Recheneinrichtung 11 anzeigt, so wird die Schnittstelleneinrichtung 14 die Anfragenachricht Sa verarbeiten. Die Schnittstelleneinrichtung 14 kann beispielsweise prüfen, ob die Anfragenachricht von einer bekannten Quelle bzw. in ausreichend signierter Form übertragen worden ist und/oder frei von Steuerbefehlen oder Steuerprogrammen ist.

Stellt die Schnittstelleneinrichtung 14 bei ihrer Prüfung fest, dass die Anfragenachricht Sa unkritisch ist, so kann sie diese unverändert oder in modifizierter Form als modifizierte Anfragenachricht Sa1 über den unidirektionalen Eingangsdatenpfad 100 in Richtung der Recheneinrichtung 11 übermitteln. Da die Schnittstelleneinrichtung 14 weiß, dass die Recheneinrichtung 11 Daten jeglicher Art, also auch die Anfragenachricht Sa oder die modifizierte Anfragenachricht Sa1, nur akzeptieren wird, wenn diese innerhalb einer von ihr selbst initiierten Übertragungssession SES übermittelt werden, wird sie die Weiterleitung der Anfragenachricht Sa bzw. der modifizierten Anfragenachricht Sa1 ggf. zurückstellen bzw. erst dann oder nur dann durchführen, wenn - wie in der Figur 1 angedeutet - die Recheneinrichtung 11 eine solche Übertragungssession SES zuvor bereits eröffnet hat.

Die Figur 2 zeigt die Weiterleitung der Anfragenachricht Sa bzw. der modifizierten Anfragenachricht Sa1 in der bereits bestehenden Übertragungssession SES.

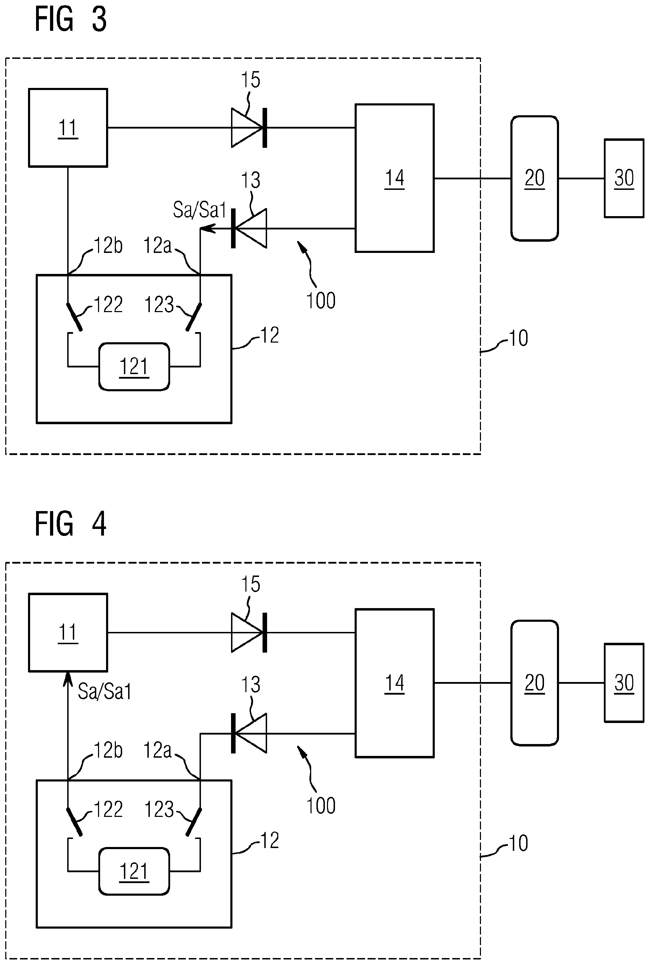

Die Figur 3 zeigt, wie die Anfragenachricht Sa bzw. die modifizierte Anfragenachricht Sa1 über den unidirektionalen Eingangsdatenpfad 100 zur Eingangsdatendiode 13 und von dieser zum ersten Anschluss 12a der Datenschleuse 12 gelangt.

Ist die Datenschleuse 12 bzw. deren Zwischenspeicher 121 über den ersten Anschluss 12a mit der Eingangsdatendiode 13 verbunden, so kann die Anfragenachricht Sa bzw. die modifizierte Anfragenachricht Sa1 im Zwischenspeicher 121 abgespeichert werden.

Sobald der erste Anschluss 12a der Datenschleuse 12 von der Eingangsdatendiode 13 getrennt ist, kann der zweite Anschluss 12b der Datenschleuse 12 mit der Recheneinrichtung 11 verbunden und die in dem Zwischenspeicher 121 gespeicherte Anfragenachricht Sa bzw. die modifizierte Anfragenachricht Sa1 zur Recheneinrichtung 11 übertragen werden (siehe Figur 4).

Sobald die Recheneinrichtung 11 die Anfragenachricht Sa bzw. die modifizierte Anfragenachricht Sa1 erhalten hat, kann sie diese verarbeiten und entscheiden, ob sie Daten der externen Datensendeeinrichtung 30 empfangen will bzw. darf.

Nachfolgend wird beispielhaft davon ausgegangen, dass die Anfragenachricht Sa bzw. die modifizierte Anfragenachricht Sa1 der Recheneinrichtung 11 signalisieren, dass Update-Nachrichten bzw. Update-Software von der externen Datensendeeinrichtung übertragen werden soll und eine solche Übertragung auch zulässig ist.

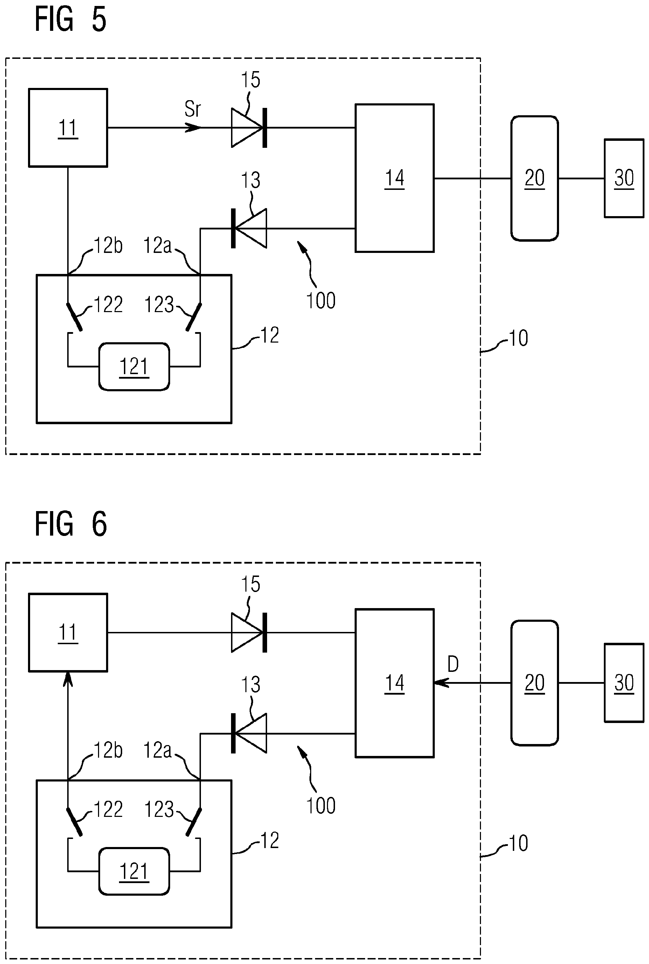

Die Recheneinrichtung 11 wird im letztgenannten Fall über die Ausgangsdatendiode 15 eine Antwortnachricht Sr an das Kommunikationsnetz 20 und damit an die externe Datensendeeinrichtung 30 übermitteln, wie dies beispielhaft die Figur 5 zeigt. Das Übermitteln der Antwortnachricht Sr kann unmittelbar von der Ausgangsdatendiode 15 über das Kommunikationsnetz 20 zur externen Datensendereinrichtung 30 erfolgen oder stattdessen mittelbar über die Schnittstelleneinrichtung 14.

Die Antwortnachricht Sr enthält vorzugsweise Angaben bezüglich eines vorgegebenen Zeitpunkts oder Zeitschlitzes, zu dem die Schnittstelleneinrichtung 14 der Rechenanlage 10 für einen Datenempfang weiterer Daten der externen Datensendeeinrichtung 30 zur Verfügung steht und einen weiteren Datenempfang ermöglichen wird. Die Zeitpunkte oder Zeitschlitze entsprechen vorzugsweise denjenigen Zeitpunkten oder Zeitschlitzen, zu denen die Recheneinrichtung 11 beabsichtigt, eine Übertragungssession SES mit der Schnittstelleneinrichtung 14 zu unterhalten, damit eine zeitnahe Weiterleitung der Daten möglich ist. Sobald die externe Datensendeeinrichtung 30 die Antwortnachricht Sr von der Recheneinrichtung 11 empfangen hat, so kann sie unter Einhaltung der vorgegebenen Zeitpunkte bzw. Zeitschlitze, die von der Recheneinrichtung 11 vorgegeben worden sind, ihre Daten D, beispielsweise Update-Daten, zu der Schnittstelleneinrichtung 14 übermitteln (siehe Figur 6) .

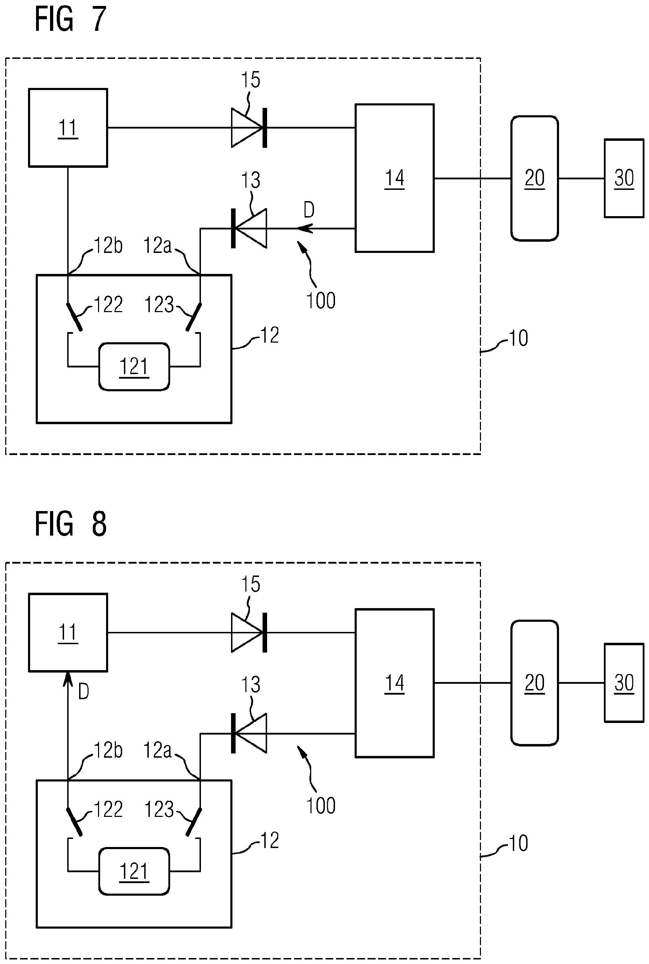

Die Schnittstelleneinrichtung 14 wird zu den vorgegebenen Zeitpunkten bzw. Zeitschlitzen die Daten erwarten und diese - sofern eine Übertragungssession SES mit der Recheneinrichtung 11 besteht oder ggf. in der jeweils nächsten Übertragungssession SES - über den Eingangsdatenpfad 100 zur Recheneinrichtung 11 übermitteln (siehe Figur 7).

Die Schnittstelleneinrichtung 14 erhält die Information über die vorgegebenen Zeitpunkte bzw. Zeitschlitze, zu denen sie einen Datenempfang ermöglichen soll, beispielsweise durch die Antwortnachricht Sr, sofern diese über die Schnittstelleneinrichtung 14 in das Kommunikationsnetz 20 eingespeist wird; andernfalls wird sie von der Recheneinrichtung 11 vorzugsweise separat informiert.

Die von der externen Datensendeeinrichtung 30 über die Schnittstelleneinrichtung 14 zu den vorgegebenen Zeitpunkten bzw. Zeitschlitzen übertragenen Daten D werden über den Eingangsdatenpfad 100 und damit über die Datenschleuse 12 übermittelt, so dass ein unmittelbarer Zugriff der externen Datensendeeinrichtung 30 bzw. der Schnittstelleneinrichtung 14 auf die Recheneinrichtung 11 wiederum zu keinem Zeitpunkt transparent möglich ist.

Nachdem - vorzugsweise Datenpaket für Datenpaket - die Daten D der externen Datensendeeinrichtung 30 über die Schnittstelleneinrichtung 14 und die Datenschleuse 12 zur Recheneinrichtung 11 übertragen worden sind (siehe Figur 8), kann die Recheneinrichtung 11 überprüfen, ob die empfangenen Datenpakete bzw. die empfangenen Daten D insgesamt unbeschädigt bzw. unverändert übertragen bzw. empfangen worden sind; eine solche Prüfung kann beispielsweise anhand von Prüfsummen, Hashcodes oder dergleichen erfolgen.

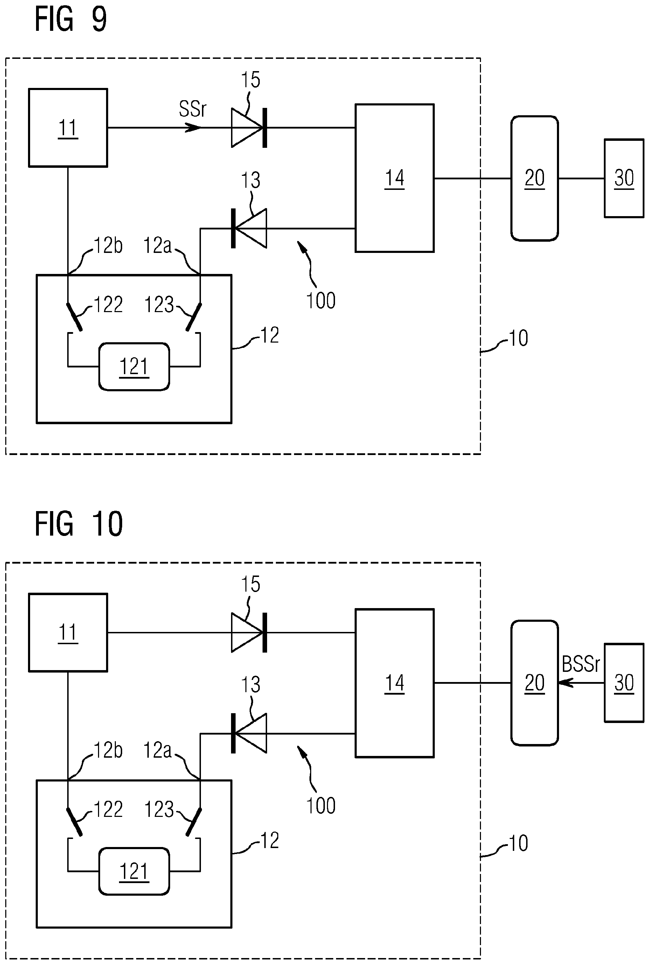

Kommt die Recheneinrichtung 11 zu dem Ergebnis, dass die empfangenen Daten der externen Datensendeeinrichtung 30 korrekt empfangen worden sind, so kann sie einen Signaturdatensatz SSr erzeugen und diesen über die Ausgangsdatendiode 15 und das Kommunikationsnetz 20 zu der externen Datensendeeinrichtung 30 übermitteln. Die Übermittlung kann die Schnittstelleneinrichtung 14 oder eine andere in der Figur 1 nicht gezeigte Komponente einbeziehen (siehe Figur 9).

Die externe Datensendeeinrichtung 30 hat nunmehr die Möglichkeit, anhand des empfangenen Signaturdatensatzes SSr ihrerseits zu prüfen, ob die von der Recheneinrichtung 11 empfangenen Daten D korrekt sind bzw. von dieser korrekt empfangen worden sind. Stellt sie anhand des Signaturdatensatzes SSr fest, dass ein korrekter Datenempfang seitens der Recheneinrichtung 11 über den Eingangsdatenpfad 100 erfolgt ist, so überträgt sie ausgangsseitig ein Bestätigungssignal BSSr über die Schnittstelleneinrichtung 14 und den Eingangsdatenpfad 100, also unter Einschluss der Datenschleuse 12, zur Recheneinrichtung 11 (siehe Figur 10).

Erst nachdem die Recheneinrichtung 11 dieses Bestätigungssignal BSSr von der externen Datensendeeinrichtung 30 erhalten hat, geht sie davon aus, dass der Datenempfang über den Eingangsdatenpfad 100 korrekt verlaufen ist und die Daten D verwertet werden können.

Im Zusammenhang mit den Figuren 1 bis 10 wurde beispielhaft davon ausgegangen, dass die Übermittelung der Daten auf Initiative der externen Datensendeeinrichtung 30 erfolgt; alternativ kann die Recheneinrichtung 11 selbst aktiv eine Übertragung von Daten von der externen Datensendeeinrichtung 30 erbitten; die obigen Ausführungen gelten in diesem Falle entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rechenanlage (10) mit einer Recheneinrichtung (11), wobei
- die Rechenanlage (10) einen Eingangsdatenpfad (100), der eine Schnittstelleneinrichtung (14) der Rechenanlage (10) unidirektional mit der Recheneinrichtung (11) verbindet, und eine Ausgangsdatendiode (15), die die Recheneinrichtung (11) unidirektional mit der Schnittstelleneinrichtung (14) verbindet, aufweist,
- der Eingangsdatenpfad (100) eine Datenschleuse (12) aufweist, die mit einem ersten Anschluss mit der Schnittstelleneinrichtung (14) und mit einem zweiten Anschluss mit der Recheneinrichtung (11) in Verbindung steht,
- die Datenschleuse (12) einen Zwischenspeicher (121) zur Zwischenspeicherung von Daten aufweist, **dadurch gekennzeichnet, dass** die Datenschleuse derart ausgestaltet ist, dass der Zwischenspeicher (121) wahlweise ausschließlich mit dem ersten oder zweiten Anschluss verbindbar ist, aber nicht gleichzeitig mit beiden Anschlüssen, und
- die Recheneinrichtung (11) derart ausgestaltet ist, dass sie in der Schnittstelleneinrichtung (14) vorliegende Daten von der Schnittstelleneinrichtung (14) ausschließlich dann akzeptiert, wenn diese innerhalb einer von der Recheneinrichtung (11) selbst unter Einbezug der Ausgangsdatendiode (15) initiierten Übertragungssession (SES) von der Schnittstelleneinrichtung (14) über den Eingangsdatenpfad (100) zu der Recheneinrichtung (11) übermittelt werden.

2. Rechenanlage (10) nach Anspruch 1,
**dadurch gekennzeichnet, dass** die Schnittstelleneinrichtung (14) zum Empfang einer externen, von einer externen Datensendeeinrichtung (30) kommenden, Anfragenachricht (Sa) geeignet ist, die den Wunsch einer externen Datensendeeinrichtung (30) nach einer Datenübertragung zu der Recheneinrichtung (11) anzeigt.

3. Rechenanlage (10) nach Anspruch 2,
**dadurch gekennzeichnet, dass**
- die Schnittstelleneinrichtung (14) derart ausgestaltet ist, dass sie nach Empfang der externen Anfragenachricht (Sa) einer externen Datensendeeinrichtung (30) eine die Anfrage enthaltende modifizierte Anfragenachricht (Sa') erstellt und diese an die Datenschleuse (12) weiterleitet,
- wobei die modifizierte Anfragenachricht (Sa') Identifikationsdaten der Schnittstelleneinrichtung (14) enthält.

4. Rechenanlage (10) nach einem der voranstehenden Ansprüche 2 bis 3,
**dadurch gekennzeichnet, dass** die Schnittstelleneinrichtung (14) derart ausgestaltet ist, dass sie
- nach Empfang der externen Anfragenachricht (Sa) eine Prüfung durchführt, ob die Anfragenachricht (Sa) von einer externen Datensendeeinrichtung (30) stammt, die zum Übertragen von Daten autorisiert ist, und
- im Falle einer Anfragenachricht (Sa) von einer autorisierten Datensendeeinrichtung (30) die Anfragenachricht (Sa) oder die modifizierte Anfragenachricht (Sa') an die Datenschleuse (12) sendet und dies andernfalls unterlässt.

5. Rechenanlage (10) nach einem der voranstehenden Ansprüche 2 bis 4,
**dadurch gekennzeichnet, dass** die Schnittstelleneinrichtung (14) derart ausgestaltet ist, dass sie
- nach Empfang der externen Anfragenachricht (Sa) eine Prüfung durchführt, ob die Anfragenachricht (Sa) Steuerbefehle oder ausführbare Softwaremodule enthält, und
- falls dies der Falle ist, die Weiterleitung der Anfragenachricht (Sa) an die Datenschleuse (12) unterlässt.

6. Rechenanlage (10) nach einem der voranstehenden Ansprüche, **dadurch gekennzeichnet, dass**
- die Schnittstelleneinrichtung (14) externe Daten, die von einer externen Datensendeeinrichtung (30) auf Aufforderung der Recheneinrichtung (11) oder unaufgefordert übersandt worden sind, zwischenspeichert und
- die Recheneinrichtung (11) derart ausgestaltet ist, dass sie die in der Schnittstelleneinrichtung (14) zwischengespeicherten Daten, unverarbeitet oder von der Schnittstelleneinrichtung (14) verarbeitet, von der Schnittstelleneinrichtung (14) ausschließlich dann akzeptiert, wenn diese innerhalb einer von der Recheneinrichtung (11) selbst unter Einbezug der Ausgangsdatendiode (15) initiierten vorzugsweise verschlüsselten Übertragungssession (SES) von der Schnittstelleneinrichtung (14) über den Eingangsdatenpfad (100) zu der Recheneinrichtung (11) übermittelt werden.

7. Rechenanlage (10) nach einem der voranstehenden Ansprüche, **dadurch gekennzeichnet, dass** der Eingangsdatenpfad (100) eine zwischen der Schnittstelleneinrichtung (14) und der Datenschleuse (12) angeordnete Eingangsdatendiode (13) aufweist, die eine Datenübertragung in Richtung der nachgeordneten Datenschleuse (12) erlaubt und in Gegenrichtung unterbindet.

8. Eisenbahntechnische Anlage, insbesondere Stellwerk,
**dadurch gekennzeichnet, dass** diese eine Rechenanlage (10) nach einem der voranstehenden Ansprüche aufweist.

9. Verfahren zum Betreiben einer Rechenanlage (10), insbesondere einer Rechenanlage (10) nach einem der voranstehenden Ansprüche,
**dadurch gekennzeichnet, dass**
- eine Recheneinrichtung (11) der Rechenanlage (10) über eine Schnittstelleneinrichtung (14) eingehende Daten einer externen Datensendeeinrichtung (30) ausschließlich dann akzeptiert, wenn diese innerhalb einer von ihr selbst unter Einbezug einer Ausgangsdatendiode (15) initiierten, vorzugsweise verschlüsselten Übertragungssession (SES) von der Schnittstelleneinrichtung (14) über einen Eingangsdatenpfad (100), der eine der Schnittstelleneinrichtung (14) nachgeordnete Datenschleuse (12) umfasst, übermittelt werden,
- wobei die Datenschleuse (12) datenstrommäßig wahlweise ausschließlich mit der Schnittstelleneinrichtung (14) oder der Recheneinrichtung (11) verbunden wird, aber nicht gleichzeitig mit beiden.

10. Verfahren nach Anspruch 9,
**dadurch gekennzeichnet, dass**
- die Recheneinrichtung (11) nach Empfang der Daten der Datensendeeinrichtung (30) mit den Daten einen Signaturdatensatz (SSr) erstellt und diesen über die Ausgangdatendiode (15) zur externen Datensendeeinrichtung (30) sendet, und
- die Recheneinrichtung (11) die empfangenen Daten nur verwertet oder berücksichtigt, wenn die Datensendeeinrichtung (30) nach Empfang des Signaturdatensatzes (SSr) rückmeldet, dass der Signaturdatensatz (SSr) einen korrekten Datenempfang bestätigt.

11. Verfahren nach Anspruch 9 oder 10,
**dadurch gekennzeichnet, dass**
- mit der Schnittstelleneinrichtung (14) nach Empfang einer externen Anfragenachricht (Sa) einer externen Datensendeeinrichtung (30) eine die Anfrage enthaltende modifizierte Anfragenachricht (Sa') erstellt und diese an die Datenschleuse (12) weitergeleitet wird, wobei die modifizierte Anfragenachricht (Sa') Identifikationsdaten der Schnittstelleneinrichtung (14) enthält und/oder
- nach Empfang einer externen Anfragenachricht (Sa) eine Prüfung durchgeführt wird, ob die Anfragenachricht (Sa) von einer externen Datensendeeinrichtung (30) stammt, die zum Übertragen von Daten autorisiert ist, im Falle einer Anfragenachricht (Sa) von einer autorisierten Datensendeeinrichtung (30) die Anfragenachricht (Sa) oder die modifizierte Anfragenachricht (Sa') an die Eingangsdatendiode (13) gesendet wird und dies andernfalls unterlassen wird und/oder
- nach Empfang einer externen Anfragenachricht (Sa) eine Prüfung durchgeführt wird, ob die Anfragenachricht (Sa) Steuerbefehle oder ausführbare Softwaremodule enthält, und falls dies der Fall ist, die Weiterleitung der Anfragenachricht (Sa) an die Eingangsdatendiode (13) unterlassen wird und/oder
- die Recheneinrichtung (11) nach Empfang von Daten einer externen Datensendeeinrichtung (30) mit diesen einen Signaturdatensatz (SSr) erstellt und den Signaturdatensatz (SSr) über die Ausgangsdatendiode (15) zur externen Datensendeeinrichtung (30) sendet und/oder
- in einem Zwischenspeicher in der Eingangsdatendiode (13) oder mit einem Zwischenspeicher zwischen der Eingangsdatendiode und der Datenschleuse (12) die externe oder modifizierte Anfragenachricht (Sa) und/oder die Daten der externen Datensendeeinrichtung (30) zwischengespeichert werden und erst anschließend aufgeteilt auf Datenpakete - Datenpaket für Datenpaket - über die Datenschleuse (12) zur Recheneinrichtung (11) übertragen werden und/oder
- in dem Eingangsdatenpfad (100) zumindest ein Medienwechsel, insbesondere zumindest ein physikalischer Medienwechsel, ein Protokollwechsel und/oder ein Transport-Medienwechsel, durchgeführt wird und/oder
- zur Fehlererkennung bei der Datenübertragung Sequenzen gezählt und/oder Signaturen übertragen werden und/oder
- die Recheneinrichtung (11) die Datenschleuse (12) zumindest mitansteuert, insbesondere derart ansteuert, dass, wenn nur ausgehender Datenverkehr erlaubt sein soll, die Recheneinrichtung (11) mit der Datenschleuse (12) verbunden ist und die Verbindung zwischen der Datenschleuse (12) und der Datensendeeinrichtung (30) unterbunden ist, und dass, wenn Daten übertragen werden sollen, die Recheneinrichtung (11) ein Umschalten der Datenschleuse (12) auslöst.

## Claims

1. Computing system (10) having a computing device (11), wherein
- the computing system (10) has an input data path (100), which unidirectionally connects an interface device (14) of the computing system (10) to the computing device (11), and an output data diode (15), which unidirectionally connects the computing device (11) to the interface device (14),
- the input data path (100) has a data lock (12) which is connected, by way of a first connection, to the interface device (14) and, by way of a second connection, to the computing device (11),
- the data lock (12) has a buffer (121) for buffering data, **characterized in that** the data lock is configured such that the buffer (121) can either be exclusively connected by way of the first or second connection, but not by way of both connections at the same time, and
- the computing device (11) is configured in such a manner that it accepts data present in the interface device (14) from the interface device (14) only when said data are transmitted from the interface device (14) to the computing device (11) via the input data path (100) within a transmission session (SES) initiated by the computing device (11) itself with the inclusion of the output data diode (15).

2. Computing system (10) according to Claim 1,
**characterized in that**
the interface device (14) is suitable for receiving an external request message (Sa) which comes from an external data transmitting device (30) and indicates the desire of an external data transmitting device (30) to transmit data to the computing device (11).

3. Computing system (10) according to Claim 2,
**characterized in that**
- the interface device (14) is configured in such a manner that, after receiving the external request message (Sa) from an external data transmitting device (30), it creates a modified request message (Sa') containing the request and forwards it to the data lock (12),
- wherein the modified request message (Sa') contains identification data relating to the interface device (14) .

4. Computing system (10) according to one of the preceding Claims 2 to 3,
**characterized in that**
the interface device (14) is configured in such a manner that
- after receiving the external request message (Sa), it carries out a check in order to determine whether the request message (Sa) comes from an external data transmitting device (30) which is authorized to transmit data, and
- in the event of a request message (Sa) from an authorized data transmitting device (30), it transmits the request message (Sa) or the modified request message (Sa') to the data lock (12) and otherwise does not do so.

5. Computing system (10) according to one of the preceding Claims 2 to 4,
**characterized in that**
the interface device (14) is configured in such a manner that
- after receiving the external request message (Sa), it carries out a check in order to determine whether the request message (Sa) contains control commands or executable software modules, and
- if this is the case, it does not forward the request message (Sa) to the data lock (12).

6. Computing system (10) according to one of the preceding claims,
**characterized in that**
- the interface device (14) buffers external data which have been transmitted by an external data transmitting device (30) at the request of the computing device (11) or without request, and
- the computing device (11) is configured in such a manner that it accepts the data buffered in the interface device (14), in unprocessed form or in a form processed by the interface device (14), from the interface device (14) only when said data are transmitted from the interface device (14) to the computing device (11) via the input data path (100) within a transmission session (SES) which is initiated by the computing device (11) itself with the inclusion of the output data diode (15) and is preferably encrypted.

7. Computing system (10) according to one of the preceding claims,
**characterized in that**
the input data path (100) has an input data diode (13) which is arranged between the interface device (14) and the data lock (12) and allows data to be transmitted in the direction of the data lock (12) arranged downstream and prevents this in the opposite direction.

8. Railway system, in particular signal box,
**characterized in that**
it has a computing system (10) according to one of the preceding claims.

9. Method for operating a computing system (10), in particular a computing system (10) according to one of the preceding claims,
**characterized in that**
- a computing device (11) of the computing system (10) accepts data from an external data transmitting device (30), which arrive via an interface device (14), only when said data are transmitted from the interface device (14) via an input data path (100), which comprises a data lock (12) arranged downstream of the interface device (14), within a transmission session (SES) which is initiated by the computing device itself with the inclusion of an output data diode (15) and is preferably encrypted,
- wherein the data lock (12) is either exclusively connected to the interface device (14) or to the computing device (11) in terms of the data stream, but is not connected to both at the same time.

10. Method according to Claim 9,
**characterized in that**
- after receiving the data from the data transmitting device (30), the computing device (11) creates a signature data record (SSr) using the data and transmits it to the external data transmitting device (30) via the output data diode (15), and
- the computing device (11) only uses or considers the received data if the data transmitting device (30), after receiving the signature data record (SSr), reports back that the signature data record (SSr) confirms correct data reception.

11. Method according to Claim 9 or 10,
**characterized in that**
- after receiving an external request message (Sa) from an external data transmitting device (30), a modified request message (Sa') containing the request is created using the interface device (14) and is forwarded to the data lock (12), wherein the modified request message (Sa') contains identification data relating to the interface device (14), and/or
- after receiving an external request message (Sa), a check is carried out in order to determine whether the request message (Sa) comes from an external data transmitting device (30) which is authorized to transmit data, the request message (Sa) or the modified request message (Sa') is transmitted to the input data diode (13) in the event of a request message (Sa) from an authorized data transmitting device (30) and this is otherwise not carried out, and/or
- after receiving an external request message (Sa), a check is carried out in order to determine whether the request message (Sa) contains control commands or executable software modules, and, if this is the case, the request message (Sa) is not forwarded to the input data diode (13), and/or
- after receiving data from an external data transmitting device (30), the computing device (11) creates a signature data record (SSr) using said data and transmits the signature data record (SSr) to the external data transmitting device (30) via the output data diode (15), and/or
- the external or modified request message (Sa) and/or the data from the external data transmitting device (30) is/are buffered in a buffer in the input data diode (13) or using a buffer between the input data diode and the data lock (12) and is/are only then transmitted, in a manner divided into data packets, to the computing device (11) data packet by data packet via the data lock (12), and/or
- at least one media change, in particular at least one physical media change, a protocol change and/or a transport media change, is carried out in the input data path (100), and/or
- sequences are counted and/or signatures are transmitted in order to detect errors in the transmission of data, and/or
- the computing device (11) at least concomitantly controls the data lock (12), in particular controls it in such a manner that, if only outgoing data traffic is intended to be allowed, the computing device (11) is connected to the data lock (12) and the connection between the data lock (12) and the data transmitting device (30) is prevented, and, if data are intended to be transmitted, the computing device (11) initiates a switchover of the data lock (12).

## Revendications

1. Calculateur (10) ayant une calculatrice (11),
dans lequel
- le calculateur (10) a un chemin (100) de données d'entrée, qui relie un dispositif (14) d'interface du calculateur (10) unidirectionnellement à la calculatrice (11), et une diode (15) de données de sortie, qui relie la calculatrice (11) unidirectionnellement au dispositif (14) d'interface,
- le chemin (100) de données d'entrée a un sas (12) de données, qui est en liaison par un premier accès avec le dispositif (14) d'interface et par un deuxième accès avec la calculatrice (11),
- le sas (12) de données a une mémoire (121) intermédiaire pour la mise en mémoire intermédiaire de données,
**caractérisé en ce que** le sas de données est conformé de manière à ce que la mémoire (121) intermédiaire puisse au choix être reliée exclusivement au premier ou au deuxième accès, mais non en même temps aux deux accès, et
- la calculatrice (11) est conformée de manière à ce qu'elle accepte des données se trouvant dans le dispositif (14) d'interface, en provenance du dispositif (14) d'interface, exclusivement si elles sont transmises du dispositif (14) d'interface à la calculatrice (11) par le chemin (100) de données d'entrée dans une session (SES) de transfert lancée par la calculatrice (11) elle-même, y compris la diode (15) de données de sortie.

2. Calculateur (10) suivant la revendication 1,
**caractérisé en ce que**
le dispositif (14) d'interface est propre à la réception d'un message (Sa) de demande extérieur, venant d'un dispositif (30) extérieur d'envoi de données, qui indique que le dispositif (30) extérieur souhaite envoyer des données à la calculatrice (11).

3. Calculateur (10) suivant la revendication 2,
**caractérisé en ce que**
- le dispositif (14) d'interface est conformé de manière à ce qu'il établisse, après la réception du message (Sa) extérieur de demande d'un dispositif (30) extérieur d'envoi de données, un message (Sa') de demande modifié contenant la demande et achemine celui-ci au sas (12) de données,
- dans lequel le message (Sa') de demande modifié contient des données d'identification du dispositif (14) d'interface.

4. Calculateur (10) suivant l'une des revendications 2 à 3 précédentes,
**caractérisé en ce que**
le dispositif (14) d'interface est conformé, de manière à ce que
- il effectue, après réception du message (Sa) extérieur de demande, un contrôle du point de savoir si le message (Sa) de données provient d'un dispositif (30) extérieur d'envoi de données, qui est autorisé à transmettre des données, et
- dans le cas d'un message (Sa) de données provenant d'un dispositif (30) autorisé d'émission de données, envoie le message (Sa) de demande ou le message (Sa') de demande modifié au sas (12) de données, et sinon le néglige.

5. Calculateur (10) suivant l'une des revendications 2 à 4 précédentes,
**caractérisé en ce que**
le dispositif (14) d'interface est conformé, de manière
- a effectuer, après la réception du message (Sa) extérieur de demande, un contrôle du point de savoir, si le message (Sa) de données contient des instructions de commande ou des modules logiciels pouvant être exécutés, et
- si cela est le cas, néglige d'acheminer le message (Sa) de demande au sas (12) de données.

6. Calculateur (10) suivant l'une des revendications précédentes,
**caractérisé en ce que**
- le dispositif (14) d'interface met en mémoire intermédiaire des données extérieures, qui ont été envoyées sur invitation de la calculatrice (11) ou sans invitation par un dispositif (30) extérieur, et
- la calculatrice (11) est conformée de manière à ce qu'elle accepte les données, mises en mémoire intermédiaire dans le dispositif (14) d'interface, non traitées ou traitées par le dispositif (14) d'interface, provenant du dispositif (14) d'interface exclusivement, si celles-ci sont transmises du dispositif (14) d'interface à la calculatrice (11) par l'intermédiaire du chemin (100) de données d'entrée dans un session (SES) de transfert, de préférence chiffrée, lancée par la calculatrice (11) elle-même, y compris la diode (15) de sortie.

7. Calculateur (10) suivant l'une des revendications précédentes,
**caractérisé en ce que**
le chemin (100) de données d'entrée a une diode (13) de données d'entrée, qui est montée entre le dispositif (14) d'interface et le sas (12) d'entrée, qui autorise une transmission de données dans le sens du sas (12) de données en aval et qui l'interdit en sens contraire.

8. Installation de technique ferroviaire, notamment poste de commande,
**caractérisée en ce qu'**
elle a un calculateur (10) suivant l'une des revendications précédentes.

9. Procédé pour faire fonctionner un calculateur (10), notamment un calculateur (10) suivant l'une des revendications précédentes,
**caractérisé en ce que**
- une calculatrice (11) du calculateur (10) accepte des données, entrant par l'intermédiaire d'un dispositif (14) d'interface, d'un dispositif (30) extérieur d'envoi de données exclusivement si celles-ci sont, dans une session (SES) de transmission, de préférence chiffrée, lancée par lui-même, y compris une diode (15) de données de sortie, transmises par le dispositif (14) d'interface par un chemin (100) de données d'entrée, qui comprend un sas (12) de données en aval du dispositif (14) d'interface,
- dans lequel le sas (12) de données est relié en flux de données au choix exclusivement au dispositif (14) d'interface ou à la calculatrice (11), mais non aux deux en même temps.

10. Procédé suivant la revendication 9,
**caractérisé en ce que**
- la calculatrice (11) établit, après réception des données du dispositif (30) d'émission de données, un ensemble (SSr) de données de signature et l'envoie, par l'intermédiaire de la diode (15) de données de sortie au dispositif (30) extérieur d'envoi de données, et
- la calculatrice (11) n'exploite ou ne prend en compte les données reçues que si le dispositif (30) d'envoi de données (SSr) accuse, après réception de l'ensemble de données de signature, réception que l'ensemble (SSr) de données de signature confirme une réception de données correcte.

11. Procédé suivant la revendication 9 ou 10,
**caractérisé en ce que**
- on établit, par le dispositif (14) d'interface, après réception d'un message (Sa) extérieur de demande d'un dispositif (30) extérieur d'envoi de données, un message (Sa') de demande modifié contenant la demande et on l'achemine au sas (12) de données, dans lequel le message (Sa') de demande modifié contient des données d'identification du dispositif (14) d'interface, et/ou
- après réception d'un message (Sa) extérieur de demande, on effectue un contrôle sur le point de savoir si le message (Sa) de demande provient d'un dispositif (30) extérieur d'envoi de données, qui est autorisé à transmettre des données, dans le cas d'un message (Sa) de demande provenant d'un dispositif (30) autorisé à envoyer des données, on envoie le message (Sa) de demande ou le message (Sa') de demande modifié à la diode (13) de données d'entrée, et sinon on le néglige, et/ou
- après réception d'un message (Sa) extérieur de demande, on effectue un contrôle sur le point de savoir si le message (Sa) de données contient des instructions de commande ou des modules logiciels pouvant être exécutés, et si cela n'est pas le cas, on néglige d'acheminer le message (Sa) de demande à la diode (13) de données d'entrée, et/ou
- la calculatrice (11), après réception de données d'un dispositif (30) extérieur d'envoi de données, établit avec celles-ci un ensemble (SSr) de données de signature et envoie l'ensemble (SSr) de données de signature au dispositif (30) extérieur d'envoi de données par l'intermédiaire de la diode (15) de données de sortie, et/ou
- on met en mémoire intermédiaire, dans une mémoire intermédiaire dans la diode (13) de données d'entrée ou par une mémoire intermédiaire entre la diode de données d'entrée et le sas (12) de données, le message (Sa) de demande extérieur ou modifié et/ou les données du dispositif (30) extérieur d'envoi de données et on ne le transmet ensuite que subdivisé en paquets de données - paquet de données par paquet de données - à la calculatrice (11) par l'intermédiaire du sas (12) de données, et/ou
- on effectue, dans le chemin (100) de données d'entrée, au moins un changement de support, notamment un changement de support physique, un changement de protocole et/ou un changement de support de transport, et/ou
- pou détecter une erreur, lors de la transmission de données, on compte des séquences et/ou on transmet des signatures, et/ou
- la calculatrice (11) commande au moins le sas (12) de données, notamment le commande de façon à ce que, lorsque seulement un trafic de données sortant doit être autorisé, la calculatrice (11) soit reliée au sas (12) de données et la liaison entre le sas (12) de données et le dispositif (30) d'envoi de données soit supprimée et **en ce que**, lorsque des données doivent être transmises, la calculatrice (11) déclenche une commutation du sas (12) de données.
